# EUROPÄISCHE PATENTSCHRIFT

(11) **EP 1 624 959 B1**
(45) Veröffentlichungstag und Bekanntmachung des Hinweises auf die Patenterteilung: **15.04.2009**
(21) Anmeldenummer: 04739218.8
(22) Anmeldetag: 14.05.2004
(51) Int. Cl.: B01J 2/16, B01J 8/24

(54) **WIRBELSCHICHTVORRICHTUNG**
FLUIDIZED BED REACTOR
DISPOSITIF A LIT FLUIDISE

(30) Priorität: 16.05.2003 DE 10323089
(43) Veröffentlichungstag der Anmeldung: 15.02.2006
(73) Patentinhaber: Glatt Process Technology GmbH, 79589 Binzen (DE)
(72) Erfinder: STRUSCHKA, Manfred, 79424 Auggen (DE); THOMANN, Winfried, 79589 Binzen (DE); DRESSLER, Jochen, 79589 Binzen (DE)
(74) Vertreter: Pfenning, Meinig & Partner GbR
(86) Internationale Anmeldenummer: PCT/EP2004/005243
(87) Internationale Veröffentlichungsnummer: WO 2004/101133

(56) Entgegenhaltungen:
- EP-A- 0 597 092
- EP-A- 1 295 633
- WO-A-01/37980
- US-A- 4 858 552
- US-A- 5 437 889
- PATENT ABSTRACTS OF JAPAN Bd. 2003, Nr. 05, 12. Mai 2003 (2003-05-12) -& JP 2003 001090 A (PAURETSUKU:KK), 7. Januar 2003 (2003-01-07)
- PATENT ABSTRACTS OF JAPAN Bd. 1999, Nr. 05, 31. Mai 1999 (1999-05-31) & JP 11 033386 A (KAWASAKI HEAVY IND LTD), 9. Februar 1999 (1999-02-09)

## Beschreibung

Die Erfindung betrifft eine Wirbelschichtvorrichtung zum Granulieren und Beschichten von Partikeln in Kleinstmengen.

Wirbelschichtanlagen zum Granulieren und Beschichten von Partikeln sind allgemein bekannt, wobei diese Anlagen einen Behälter aufweisen, dem zu beschichtende Partikel zugeführt werden, die in einem gerichteten Gasstrom fluidisiert werden. An dem Behälter sind ein oder mehrere Sprühdüsen zum Einsprühen flüssiger und/oder gegebenenfalls pulverförmiger Stoffe angebracht, mit denen die fluidisierten Partikel beschichtet werden sollen. Filter sind vorgesehen, um das Prozessgas abzuziehen, ohne die Partikel mitzureißen. Solche Anlagen dienen zum Verarbeiten von Partikeln in großen Mengen, d.h. zum Verarbeiten von großen Produktmengen und sie können nicht ohne weiteres auf kleine Produktmengen angewandt werden.

Die US-A-4 858 552 offenbart eine Wirbelschichtvorrichtung mit höhenverstellbarer Zweistoffdüse, Siebboden und Leitelement, wobei das Leitelement höhenverstellbar ist.

Das Problem bei der Verarbeitung von Kleinstmengen besteht darin, dass sie wie bei pneumatischem Transport zumindest teilweise durch den Fluidisierungsstrom weggeführt werden, und bei den bekannten Wirbelschichtanlagen liegen diese Kleinstmengen im Rahmen der üblichen Materialverluste.

Weiterhin haften die Materialien zumindest teilweise an den Wänden oder dem Boden der Behälter an, wobei bei konventionellen Prozessen mit größeren Produktmengen die Produktanhaftungen durch das verwirbelte Produkt selbst abgereinigt werden.

Der Erfindung liegt daher die Aufgabe zugrunde, eine Wirbelschichtvorrichtung für Kleinstmengen an Produktteilchen zu schaffen, die einen äußerst hohen Wirkungsgrad aufweist und mit der die Feststoffteilchen möglichst vollständig und gleichmäßig beschichtet werden können.

Diese Aufgabe wird erfindungsgemäß durch die Merkmale des Hauptanspruchs gelöst. Durch die in den Unteransprüchen angegebenen Maßnahmen sind vorteilhafte Weiterbildungen und Verbesserungen möglich.

Die erfindungsgemäße Wirbelschichtvorrichtung weist unter anderen einen konusförmigen Produktbehälter mit Siebboden auf, in den mittig eine Zweistoffdüse eingesetzt ist, die abhängig von dem zu bearbeitenden Produkt und der Prozessart in ihrer Höhe in Bezug auf den Siebboden verstellbar ist. Dem Siebboden ist mindestens ein Leitelement zugeordnet, das die Prozessluft mit einer radialen Komponente zumindest teilweise in die Richtung der Zweistoffdüse führt. Aufgrund der Luft- und Strömungsführungen und der Möglichkeit die Düse in der Düsenhalterung in ihrer Höhe verstellbar einzustellen, können geringe Mengen eines Produktes, die unterschiedliche Flug- und Trocken- und elektroisostatische Eigenschaften besitzen oder erhalten müssen in schonender Weise verarbeitet werden. Durch die Verstellbarkeit der Zweistoffdüse gegebenenfalls mit teilweiser Austauschbarkeit der Düsenhalterung mit unterschiedlichen Durchmessern der Ausströmöffnung des mindestens einen Luftführungskanals ist eine gute Anpassung an die Prozessart z.B. Coating/Granulation und die Eigenschaften des Produktes möglich. Aufgrund der gerichteten Luftanströmung am Siebboden wird sichergestellt, dass sich an keiner Stelle des Bodens Produkt anlagert und sich so dem Prozess entziehen kann. Insgesamt wird ein gleichmäßiges Granulations- oder Coatingergebnis erzielt, wobei eine Überfeuchtung der Feststoffteilchen aufgrund der Verstellbarkeit der Zweistoffdüse und gegebenenfalls der Austauschbarkeit der Düsenhalterung, d.h. einer den Luftführungskanal aufweisenden Ringkappe entgegengewirkt werden kann.

Vorzugsweise ist das Leitelement als am unteren Teil des Produktbehälters radial nach innen vorgesehener z.B. angeformter Flansch ausgebildet, wodurch zwischen Siebboden und Flansch ein Spalt mit zur Zweistoffdüse gerichteten Öffnung zur radialen Luftführung entsteht. Es ist auch denkbar, dass das Leitelement als ringförmiger Einsatz ausgebildet ist. Die Düsenhalterung ist in dem in den Prozessbehälter hineinragenden Bereich als gerader oder gekrümmter Kegel ausgebildet, dadurch wird die Führung der Teilchen in Bezug auf den von der Zweistoffdüse erzeugten Sprühkegel verbessert. Ebenfalls verbessert wird die Führung der Partikel im Rückführstrom zur Düse hin.

In vorteilhafter Weise wird somit die Prozessluft in drei Komponenten aufgeteilt, eine Hauptprozessluft, die durch die Freifläche des Siebbodens strömt, eine erste Teilprozessluft, die in dem Spalt radial nach innen strömt und eine zweite Teilprozessluft, die koaxial um die Düse herum in den Produktbehälter strömt.

Durch Vorsehen eines Übergangsgehäuses zwischen Produktbehälter und Filtergehäuse ist die Flugstrecke der Partikel verlängerbar, so dass ein Anhaften an den Filtern in dem Filtergehäuse verringert wird.

In vorteilhafter Weise ist in der Wand des Filtergehäuses oder des Übergangsgehäuses eine Beschickungsvorrichtung eingesetzt, die eine dichtende Aufnahme für einen Versorgungsbehälter des Ausgangsproduktes aufweist. Diese Beschickungsvorrichtung ist so ausgebildet, dass der Versorgungsbehälter in einer ersten Stellung verschlossen ist und in einer zweiten Stellung mit dem Innenraum der Vorrichtung in Verbindung steht. Es ist dadurch eine staubfreie und kontaminationsarme Befüllung der Anlage im laufenden Betrieb und eine geschlossene aseptische Prozessführung möglich. Die Anlage kann zusätzlich aufgrund der Größe im Gesamten in einen Abzugsschrank gestellt werden, so dass in Anlagenumgebung laminare Strömungsverhältnisse der Luft erzielt werden können, die Kontaminationskeime der Luft gezielt abziehen.

Die Beschickungsvorrichtung kann revolverförmig ausgebildet sein, d.h. es können mehrere Versorgungsbehälter an einer Trommel befestigt sein und eines der Behälter steht mit dem Innenraum in Verbindung.

In vorteilhafter Weise ist das Filtergehäuse und/oder das Übergangsgehäuse in Wirkverbindung mit einer Rüttelvorrichtung, wodurch Anhaftungen an den Wänden des Gehäuses gelöst werden können.

Dadurch, dass die einzelnen Gehäuseteile durch lösbare Schnellverbindungen miteinander verbunden sind, kann die Vorrichtung ohne Schwierigkeiten und in schneller Weise in ihre Einzelteile zerlegt und wieder montiert werden, wodurch eine einfache Reinigungsmöglichkeit und durch zusätzliche Autoklavierbarkeit die Voraussetzungen für eine aseptische Prozessführung gegeben sind.

Ausführungsbeispiele der Erfindung sind in der Zeichnung dargestellt und werden in der nachfolgenden Beschreibung näher erläutert. Es zeigen:
- Fig. 1: eine Seitenansicht der erfindungsgemäßen Wirbelschichtvorrichtung,
- Fig. 2: eine vergrößerte Ansicht des Produktbehälters mit eingesetzter Düse,
- Fig. 3: einen Teilschnitt der verwendeten Zweistoffdüse, und
- Fig. 4: einen vergrößerten Teilschnitt durch den Bodenbereich des Produktbehälters.

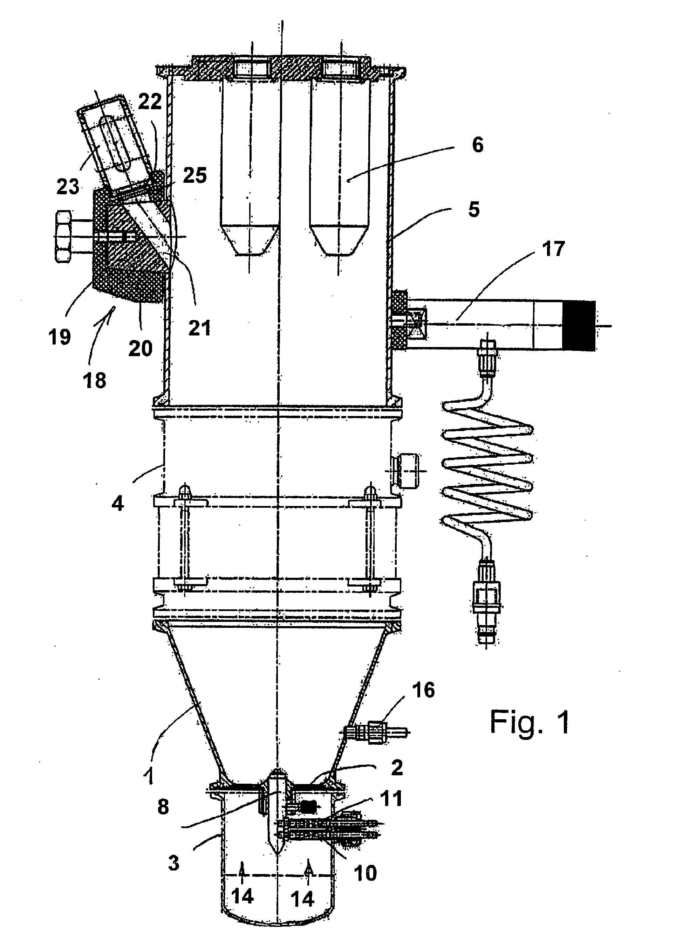

Die in Fig. 1 dargestellte Vorrichtung umfasst als Hauptbestandteile einen trichterförmigen Produktbehälter 1, der über einen Siebboden 2 mit einem Unterteil 3 in Verbindung steht. Über dem trichterförmigen Produktbehälter ist ein Übergangsgehäuse 4 angeordnet, das gegebenenfalls weggelassen werden kann. Dies ist durch die strichpunktierte Darstellung angedeutet. Weiterhin ist über dem Übergangsgehäuse 4 ein Filtergehäuse 5 vorgesehen, in das vorteilhaft als Metallfilter ausgebildete Filter 6 eingesetzt sind. Es sind jedoch auch andere Filterarten verwendbar. Produktbehälter 1, Unterteil 3, Übergangsgehäuse 4 und Filtergehäuse 5 sind lösbar miteinander verbunden, wobei zwischen ihnen nicht dargestellte Dichtringe eingesetzt sind und wobei die jeweiligen Verbindungen über lösbare Schnellverbindungen, wie Klemmverbindungen realisiert sind, die beispielsweise aus die Außenränder der verschiedenen Gehäuseteile übergreifende Klemmreifen ausgebildet sind.

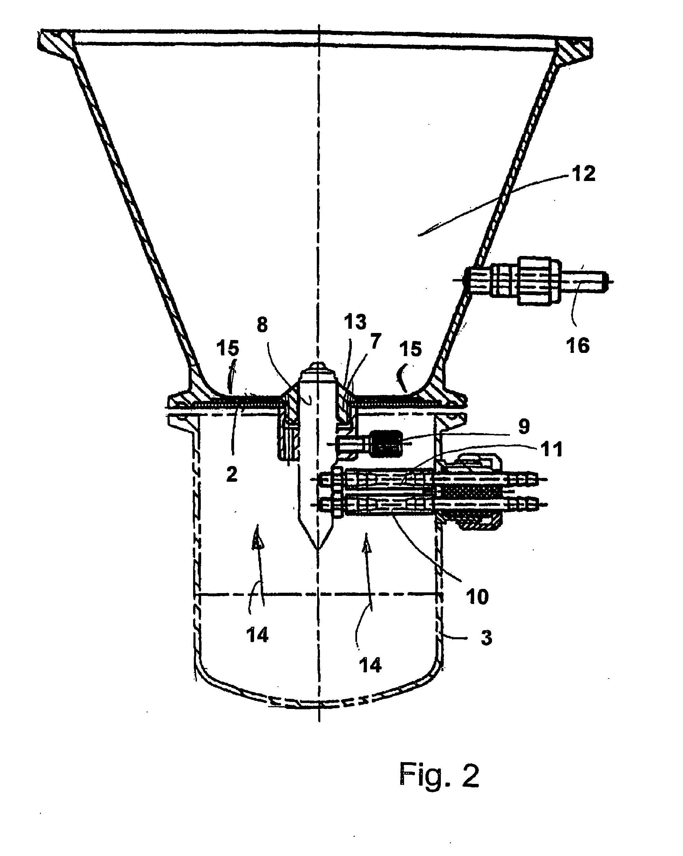

Wie näher aus Fig. 2 zu erkennen ist, ist mittig in den Siebboden 2 eine Düsenhalterung 7 eingesetzt, in der eine als Zweistoffdüse ausgebildete Sprühdüse 8 verstellbar befestigt ist. Die Verstellbarkeit ist durch die die Düsenhalterung 7 durchgreifende und die Sprühdüse 8 festklemmende Rändelschraube 9 angedeutet. Selbstverständlich kann die Höhe der Zweistoffdüse 8 auch durch eine nicht dargestellte mechanische oder elektromechanische Verstelleinrichtung von außen verstellt werden, dies auch während des eigentlichen Prozesses, wobei eine Revisionsöffnung vorgesehen sein kann.

Die Sprühdüse 8 ist mit einer flexiblen Zerstäuberluftzuführung 10 und einer flexiblen Sprühflüssigkeitszuführung 11 verbunden, die einerseits am Gehäuse des Unterteils 3 und andererseits an der Sprühdüse 8 durch Schraubverbindungen festgelegt sind. Diese Zuführungen 10, 11 sind mit entsprechenden Materialquellen verbunden.

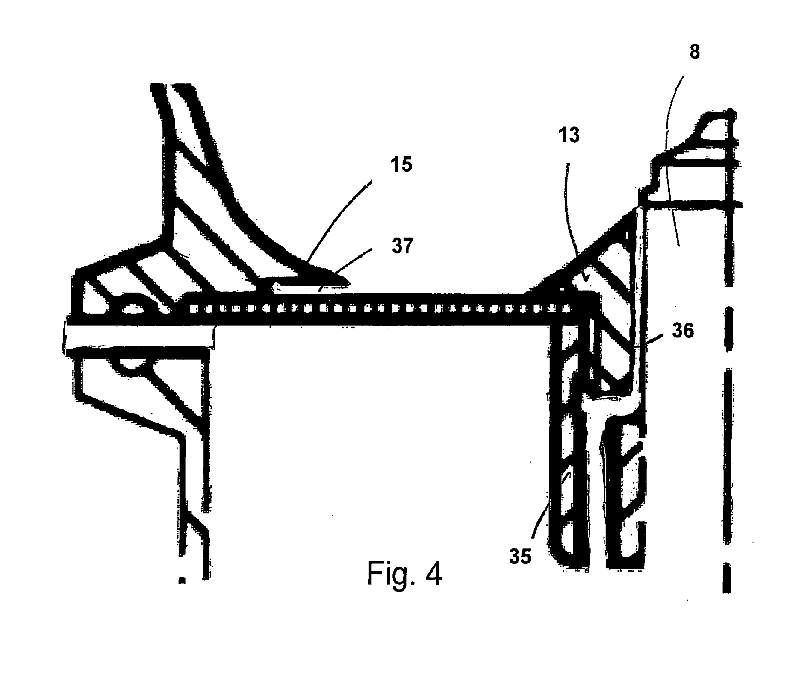

Wie in Fig. 2 und Fig. 4 zu erkennen ist, ragt die Sprühdüse 8 und ein Teil der Halterung 7 in den Innenraum 12 des Produktbehälters 1 hinein und die zur Düsenachse koaxiale Düsenhalterung 7 ist in diesem hineinragenden Bereich als Kegel ausgebildet, gegebenenfalls kann sie auch eine mit einer konvexen oder konkaven Krümmung versehene Oberfläche haben. Die Düsenhalterung 7 besteht aus zwei Teilen, einer Ringkappe 13 und einer unteren Verschraubung 35, die vom Produktbehälter 1 und vom Unterteil 3 her, die Ränder des Siebbodens 2 einklemmend, miteinander verschraubt sind. Wie zu erkennen ist, ist die Halterung 7 mit Kanälen versehen, durch die Prozessluft 14 von unten in die Halterung 7 einströmen kann. Die Kanäle leiten Prozessluft durch die Halterung, derart, dass sie neben der Sprühdüse 8 austreten und zur Führung der Partikel beitragen kann. Im Ausführungsbeispiel ist ein Ringkanal 36 vorgesehen, der in unmittelbarer Nähe der Sprühdüse 8 liegt. Die Ringkappe 13 ist austauschbar und kann so unterschiedliche Durchmesser des Ringkanals 36 umfassen, um an die jeweiligen Prozessbedingungen angepasst zu werden.

Das Unterteil 3 besitzt eine nicht dargestellte Zuführung für den Prozess führende Prozessluft im Saug- oder Druckverfahren, die durch die Pfeile 14 angedeutet ist. Der Siebboden 2 ist in eine Vertiefung auf der Unterseite des Produktbehälters eingesetzt und wird durch das Unterteil 3 in der dargestellten Stellung festgelegt.

Der Produktbehälter ist in dem Übergangsbereich zwischen der Behälterwand und dem Boden mit Abrundungen versehen, die eine gleichmäßige Luftströmung unterstützen. Selbstverständlich können andere Einbauten für die Luft- und Strömungsführung vorgesehen sein.

Oberhalb des Siebbodens 2 ist ein Leitelement 15 (siehe Fig. 4) angeordnet, das die durch den Siebboden 2 nach oben strömende Prozessluft 14 zumindest teilweise in eine radiale Richtung umlenkt, derart, dass ein zur Düse 8 gerichteter Luftstrom mit radialer Komponente entsteht. In der Detailansicht der Fig. 4 ist zu erkennen, dass das Leitelement 15 als ringflanschartiger Vorsprung ausgebildet ist, der an die Wand zusammen mit dem gekrümmten Übergangsbereich am unteren Teil des Produktbehälters 1 angeformt ist. Im Querschnitt gesehen ist das Leitelement 15 zungenförmig und zwischen Siebboden 2 und Leitelement 15 entsteht ein Spalt 37, der eine zur Sprühdüse 8 hin gerichtete Öffnung aufweist. Die im Randbereich durch den Siebboden tretende Prozessluft 14 wird an der Unterseite des Leitelementes 15 abgelenkt und des entsteht eine Strömung mit radialer Komponente.

Es sind neben der Zerstäuberströmung somit drei aus der Prozessluft abgeleitete, den Prozess unterstützende Luftströmungskomponenten vorhanden, die eigentliche Hauptprozessluft, die Radialströmung durch den Spalt 37 und die Strömung durch den Ringkanal 36. Der Spalt 37 hat dabei etwa eine Höhe von 1 mm. Die Weite des Ringkanals 36 der Ringkappe 13 kann zwischen 1/10 und 2 mm liegen.

Zur Messung der Prozesstemperatur im Produktbehälter 1 ist ein Temperaturfühler 16 in die Behälterwand eingesetzt.

Die Vorrichtung gemäß Fig. 1 ist mit einer Rüttelvorrichtung bzw. einem mechanischen Klopfer 17 ausgestattet, der im dargestellten Ausführungsbeispiel als pneumatischer Vibrator ausgebildet und an der Wand des Filtergehäuses 5 befestigt ist, wobei der Klopfer intermittierend aktiviert wird und gegebenenfalls anhaftendes Produkt von den Wänden ablöst.

Weiterhin ist eine Beschickungseinrichtung 18 für das Ausgangsprodukt vorgesehen, die einen in die Gehäusewand eingesetzten Stutzen 19 und eine drehbar mit dem Stutzen verbundene Hülse 20 umfasst. In dem Stutzen 19 ist ein Verbindungskanal 21 zum Innenraum des Filtergehäuses 5 eingearbeitet und die Hülse 20 umfasst eine Aufnahme 22 für einen Behälter 23 mit Ausgangsprodukt auf die Aufnahme 22 ist mit einem Gewinde und einem Dichtungsring 24 versehen, wobei der Behälter 23, der vorzugsweise als Aufgabeglas ausgebildet ist, ein entsprechendes Gewinde aufweist, derart, dass er in die Aufnahme 22 eingeschraubt werden kann. Im dargestellten Zustand, der die Beschickungsstellung zeigt, steht das Innere des Behälters 23 mit dem Kanal 21 und somit mit dem Innenraum des Filtergehäuses 5 in Verbindung. Die Hülse 20 ist in eine um 180° versetzte Stellung drehbar, in der das Glas bzw. der Behälter 23 mit seiner Öffnung nach oben zeigt, der Stutzen 19 jedoch die Öffnung verschließt. Die Beschickungseinrichtung ist so ausgelegt, dass er in geschlossenem Zustand auch einem eventuell in der Anlage auftretenden Überdruckereignis Stand hält, ohne Produkt an die Umgebung abzugeben. Ebenfalls aus Sicherheitsgründen kann das Glas mit einem Edelstahlmantel gekapselt sein. Somit hält die Anordnung auch während des Befüllvorganges einem Überdruckereignis stand.

An einem anderen Ausführungsbeispiel kann die Beschickungseinrichtung nach Art eines Revolvers angebildet sein, wobei an der Hülse 20 mehrere über den Umfang verteilte Aufnahmen 22 vorgesehen sind, von denen aber nur jeweils eine mit dem Verbindungskanal 21 in Verbindung steht. Es können somit mehrere unterschiedliche Ausgangsmaterialien und/oder gleiche Materialien zu unterschiedlichen Zeiten eingeführt werden.

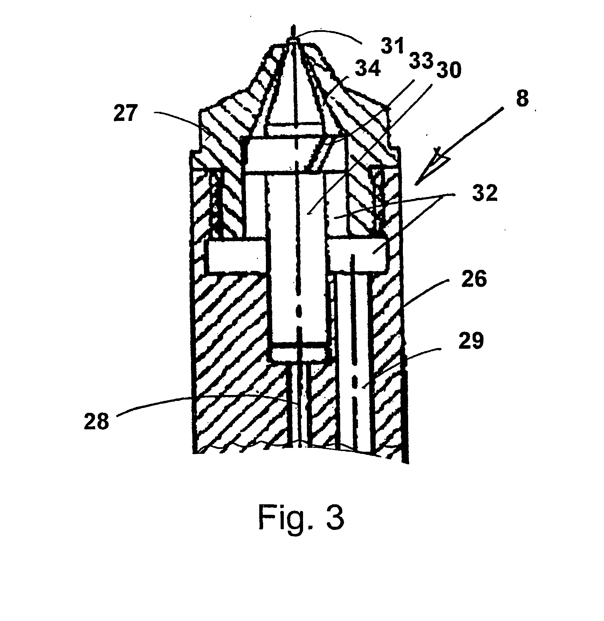

Ein Teil der Sprühdüse 8 ist in Fig. 3 dargestellt, sie weist einen Grundkörper 26 und einen dichtend in den Grundkörper eingesetzten Einsatz 27 auf. In den Grundkörper sind Kanäle 28, 29 für die Zuführung von Sprühflüssigkeit und Zerstäuberluft eingearbeitet, wobei der Sprühdüsenkanal mit einer Düsenspitze 30 verbunden ist, die eine Düsenöffnung 31 für die Sprühflüssigkeit aufweist und von dem Einsatz 27 übergriffen wird. Der Zerstäuberluftkanal 29 endet in einem um die Düsenspitze 30 vorgesehenen Ringraum 32, von wo die Zerstäuberluft durch einen Kanal 33 in der Düsenspitze 30 in einen Ringspalt 34 geleitet wird, derart, dass die aus dem Ringspalt 34 austretende Zerstäuberluft die aus der Düsenöffnung austretende Sprühflüssigkeit umgibt und mitreißt.

Die Funktionsweise und der Betrieb der Wirbelschichtvorrichtung sind wie folgt. Bei Prozessstart wird zuerst die gesamte aus den Gehäuseteilen 3, 1, gegebenenfalls 4, 5 und einem Gehäuseteil, das auf das Filtergehäuse 5 aufsetzbar ist und den Luftabzug realisiert, bestehende Prozesskammer mittels der "Hauptprozessluft" 14 so konditioniert, dass die maximale Temperaturdifferenz zwischen Zu- und Abluft minimiert ist, z.B. ein Kelvin beträgt. Während dieser Konditionierung bleibt die Prozesskammer leer, es wird kein Startmaterial vorgelegt und weiterhin wird auch noch keine Flüssigkeit versprüht. Dadurch wird sichergestellt, dass an den Behälterwänden kein Temperaturgradient zur Prozessluft entsteht, wodurch es nicht zu Kondensationsvorgängen bzw. Anhaftungen von Produkt an der Behälterwand kommt.

Nach der durchgeführten Konditionierung wird über die Beschickungsvorrichtung 18 gezielt Startmaterial (Trägermaterialien wie z.B. Zucker, insbesondere Laktose, Saccharose, Mannitol, Sorbitol oder auch Trehalose) der Prozesskammer zugeführt. Das Vorsehen der Beschickungsvorrichtung an der Seitenwand ist bewusst gewählt, damit das Produkt in den Einflussbereich der von der Sprühdüse 8 erzeugten Zerstäuberluftstrom kommt. Die Beschickung erfolgt bei geschlossener Anlage und bei weiterhin anstehender Prozessluft, d.h. der Prozess des Konditionierens wird nicht unterbrochen. Durch die Gestaltung der Beschickungsvorrichtung 18 wird sichergestellt, dass tatsächlich die gesamte vorzulegende Startmenge dem Prozess verlustfrei zugeführt wird. Vorgesehen ist, dass unterschiedliche Startmengen zwischen 2 und z.B. 100 g zugeführt werden können. Dies ist möglich, da unterschiedlich große Aufgabegläser mit der Beschickungsvorrichtung verwendet werden können, wobei die Startmengen in den als handelsübliches Schnappdeckelglas ausgebildeten Behälter 23 eingefüllt oder direkt eingewogen wird. Dieses Glas 23 wird mit der Öffnung nach oben in die Aufnahme 22 der Hülse 20 eingerastet, wobei sich die Beschickungsvorrichtung 18 dann in einer um 180° geschwenkten Position zu der Position in Fig. 1 befindet. Beim Befüllen wird die Hülse 20 in die in Fig. 1 gezeigte Stellung gedreht, wobei das Glas 23 exakt über dem schrägen Kanal 21 positioniert wird. Das Startmaterial wird quantitativ in die Prozesskammer überführt und nach dem Befüllvorgang wird die Hülse in die Ausgangsposition zurückgedreht. Danach wird das Ausgabeglas zurückgewogen, um die exakte Menge des wirklich zugeführten Startmaterials festzustellen. Dies ist bei den zu verarbeitenden Kleinstmengen sehr wichtig.

Bei einer revolverartigen Beschickungsvorrichtung sind mehrere feste Zwischenstellungen möglich, die Hülse 20 kann jeweils um einen durch die Anzahl der Aufnahmen vorgegebenen Winkelabschnitt gedreht werden.

Nachdem das Startmaterial aufgegeben wurde und sofern weiterhin keine Temperaturunterschiede zwischen Zu- und Ablufttemperatur vorliegen, kann mit dem Sprühvorgang begonnen werden. Beim eigentlichen Sprühprozess kann durch die Prozessparameter und die oben angegebene Verstell- und Austauschbarkeit der Sprühdüse 8 zwischen den Prozessarten Granulieren und Coating unterschieden werden.

Insbesondere bei Prozessbeginn bzw. beim Konditionieren der Anlage mit gerade eingefülltem Produkt ohne Flüssigkeit neigen die trockenen Partikel leicht zur elektrostatischen Aufladung und so zu Anhaftungen an der Behälterwand, so dass insbesondere in diesem Zustand der Klopfer 17 betätigt wird.

Die eingeführten Feststoffpartikel fallen aufgrund der entstehenden Luftströmung im Randbereich der Prozesskammer nach unten und gelangen in den Produktbehälter 1. Im unteren Teil des Produktbehälters werden die Partikel aufgrund der am Siebboden 2 entstehenden radialen Komponente der Luftströmung zu der Düse geführt und dort nach oben beschleunigt. Während der Beschleunigung werden die Teilchen erwärmt und eine Trocknung findet statt. Die nach oben beschleunigten Teilchen passieren den Sprühkegel, der von der Zweistoffdüse 8 erzeugt wird, im Gleichstrom und mit einem Abstand zur Düsenspitze. In diesem Kontaktbereich ist der Sprühkegel bereits vollständig ausgebildet und sehr gleichmäßig, so dass es nicht zu einer Überfeuchtung der Feststoffteilchen kommt. Nach einer gewissen Flugstrecke nach oben wird die Strömungsgeschwindigkeit so gering, dass die Partikel umkehren und wieder in Richtung Produktbehälter 1 und Siebboden 2 fallen, wo sie das Luftpolster wiederum zwangsweise in Richtung Düse führt. Einzelne Teilchen setzen sich an den Filtern ab und werden gegebenenfalls durch Ausblasimpulse wieder dem Prozess zugeführt.

Beim Granulieren soll z.B. das vorgelegte pulverförmige Startmaterial gezielt zu Granulaten aufgebaut werden. Derartige Granulate weisen dann die typischen Granulateigenschaften, wie z.B. Rieselfähigkeit, Staubfreiheit, Dosierbarkeit auf. Dabei muss die aus der Düse 8 ausgestoßene Sprühflüssigkeit ein Bindemittel (wie z.B. HPMC, PVP) enthalten, wodurch das Aneinanderhaften einzelner Startkerne sichergestellt wird. Meistens ist in der Sprühflüssigkeit auch eine aktive Substanz enthalten, die so gezielt im Granulat eingelagert wird. Unter aktiver Substanz werden z.B. pharmazeutische Wirkstoffe verstanden, die im Rahmen der Laborentwicklung noch nicht in großen Mengen verfügbar sind und deshalb nur beschränkt zugänglich und gleichzeitig sehr teuer sind oder biopharmazeutische Wirkstoffe, wie z.B. Proteine, die entweder im humanen oder tierischen Organismus vorkommen und entsprechend extrahiert werden müssen oder die rekombinant hergestellt werden können.

Bei Coating-Prozess wird gezielt vorgelegtes, verwirbeltes partikelförmiges Material oder schon zuvor bearbeitete Granulat mit einer definierten Schicht überzogen. Coating wird aufgetragen, um z.B. einen ungewünschten Geschmack zu überdecken, um gezielten Schutz des Kernmaterials gegen äußere Einflüsse zu erzielen oder um für pharmazeutische Wirkstoffe ein gezieltes Freisetzungsverhalten zu erreichen.

Die Wirbelschichtvorrichtung ist in ihren Abmessungen an die Kleinstmengen angepasst, beispielsweise hat der Produktbehälter ein Volumen von einem Liter. Bei diesen Kleinstmengen ist die Zerstäubung von unten nach oben sinnvoll und wichtig, wie sie oben beschrieben wurde.

## Patentansprüche

1. Wirbelschichtvorrichtung zum Granulieren und Beschichten von Partikeln in Kleinstmengen mit mindestens einem im Wesentlichen konusförmigen Produktbehälter (1), einem über dem Produktbehälter (1) angeordneten Filtergehäuse (5) mit eingesetzten Filtern (6) und einem unter dem konusförmigen Produktbehälter (1) angeordneten Gehäuseunterteil (3) mit einer Prozessluftzuführung, wobei der Produktbehälter (1) einen Siebboden (2) aufweist, in dem mittig eine Zweistoffdüse (8) eingesetzt ist, die abhängig von dem zu bearbeitenden Produkt und der Prozessart in ihrer Höhe in Bezug auf den Siebboden verstellbar ist und ein Leitelement (15) mit gekrümmten Übergangsbereich zur Behälterwand im unteren Teil des Prozessbehälters radial nach innen gerichtet und mit einem Luftspalt zum Siebboden angeordnet ist, das Prozessluft durch den Spalt mit einer radialen Komponente zumindest teilweise in die Richtung der Zweistoffdüse (8) führt.

2. Wirbelschichtvorrichtung nach Anspruch 1, **dadurch gekennzeichnet, dass** die Zweistoffdüse (8) mittig in einer Düsenhalterung (7) eingesetzt ist, die mindestens einen von der Prozessluft gespeisten Luftführungskanal aufweist, dessen Ausströmöffnung in ihrer Abmessung abhängig von der Höhe der Zweistoffdüse (8), des Produktes und/oder der Prozessart wählbar ist.

3. Wirbelschichtvorrichtung nach Anspruch 2, **dadurch gekennzeichnet, dass** die Düsenhalterung mit einer auswechselbaren Ringkappe für die Anpassung der Ausströmung versehen ist.

4. Wirbelschichtvorrichtung nach einem der Ansprüche 1 bis 3, **dadurch gekennzeichnet, dass** das Leitelement (15) als im unteren Bereich radial nach innen gerichteter ringartiger Vorsprung ausgebildet ist, der zu dem Siebboden (2) unter Bildung eines Spaltes einen Abstand aufweist, wobei der Spalt zur Mitte hin geöffnet ist.

5. Wirbelschichtvorrichtung nach einem der Ansprüche 1 bis 4, **dadurch gekennzeichnet, dass** die Höhe der Zweistoffdüse und/oder die Ausströmöffnung des Luftführungskanals in der Düsenhalterung abhängig von der Menge und/oder der Dichte und/oder der Form des Produktes einstellbar ist.

6. Wirbelschichtvorrichtung nach einem der Ansprüche 1 bis 5, **dadurch gekennzeichnet, dass** die Düsenhalterung (7) über den Siebboden in den Produktbehälter (1) hineinragt und der hineinragende Bereich kegelförmig ist, oder konkav oder konvex zur Zweistoffdüse hin ansteigt.

7. Wirbelschichtvorrichtung nach einem der Ansprüche 2 bis 6, **dadurch gekennzeichnet, dass** der mindestens eine Luftführungskanal als Ringspalt ausgebildet ist, der angrenzend an die Zweistoffdüse ausgebildet ist.

8. Wirbelschichtvorrichtung nach einem der Ansprüche 1 bis 7, **dadurch gekennzeichnet, dass** der Produktbehälter an seinem Übergangsbereich zum Boden Ausbildungen zum Lenken eines Rückführstroms an Partikeln in Richtung Zweistoffdüse aufweist.

9. Wirbelschichtvorrichtung nach Anspruch 8, **dadurch gekennzeichnet, dass** der Übergangsbereich mit Abrundungen versehen ist.

10. Wirbelschichtvorrichtung nach einem der Ansprüche 1 bis 9, **dadurch gekennzeichnet, dass** die zu verarbeitende Produktmenge 2 bis 100 g, bevorzugt kleiner 50 g beträgt.

11. Wirbelschichtvorrichtung nach einem der Ansprüche 1 bis 10, **dadurch gekennzeichnet, dass** zur Verlängerung der freien Flughöhe der Partikel ein Übergangsgehäuse (4) vorgesehen ist, das zwischen Produktbehälter (1) und Filtergehäuse (5) angeordnet ist.

12. Wirbelschichtvorrichtung nach einem der Ansprüche 1 bis 11, **dadurch gekennzeichnet, dass** an der Wand des Filtergehäuses oder des Übergangsgehäuses eine Beschickungsvorrichtung (18) angebracht ist, die eine dichtende Aufnahme (22) für einen die Partikel enthaltenden Versorgungsbehälter (23) aufweist.

13. Wirbelschichtvorrichtung nach Anspruch 12, **dadurch gekennzeichnet, dass** die Aufnahme (22) an einer um einen Stutzen (19) drehbaren Hülse (20) angeordnet ist und dass Hülse (20) mit Aufnahme (22) und Vorratsbehälter (23) aus einer ersten Stellung, in der der Versorgungsbehälter (23) abgeschlossen ist, in eine zweite Stellung, in der der Versorgungsbehälter (23) mit dem vom Gehäuse umfassten Innenraum in Verbindung steht, drehbar ist.

14. Wirbelschichtvorrichtung nach einem der Ansprüche 12 oder 13, **dadurch gekennzeichnet, dass** die Beschickungsvorrichtung revolverartig ausgebildet ist und eine Mehrzahl von Aufnahmen (23) aufweist.

15. Wirbelschichtvorrichtung nach einem der Ansprüche 1 bis 14, **dadurch gekennzeichnet, dass** das Filtergehäuse (5) mit einer Rüttel- oder Klopfvorrichtung (17) zum Ablösen von an den Gehäusewänden anhaftenden Partikeln versehen ist.

16. Wirbelschichtvorrichtung nach einem der Ansprüche 1 bis 15, **dadurch gekennzeichnet, dass** die einzelnen Gehäuseteile (1, 3, 4, 5) durch lösbare Schnellverbindungen, wie Klemmverbindung in abgedichteter Weise verbunden sind.

## Claims

1. A fluidised bed device for granulating and coating particles in very small quantities, with at least one essentially cone-like product container (1), with a filter housing (5) arranged above the product container (1), having inserted filters (6), and with a housing lower part (3) which is arranged below the cone-like product container (1) and which has a process air supply, wherein the product container (1) comprises a sieve bottom (2) in which a two-component nozzle (8) is centrally inserted, said two-component nozzle being adjustable in its height with respect to the sieve bottom (2) depending on the product to be processed and the process type, and a guide element (15) in the lower part of the product container, having a curved transition portion to the container wall, is oriented radially to the inside and disposed with an air gap to the sieve bottom (2), said guide element leading the process air through the gap with a radial component at least partly in the direction of the two-component nozzle (8).

2. A fluidized bed device according to claim 1, **characterized in that** the two-component nozzle (8) is inserted centrally in a nozzle holder (7) which comprises at least one air guide channel fed with process air, whose discharge opening in its dimensions may be selected depending on the height of the two-component nozzle (8), on the product and/or on the process type.

3. A fluidized bed device according to claim 2, wherein the nozzle holder is provided with an exchangeable annular cap for the adaptation of the discharge.

4. A fluidized bed device according to one of the claims 1 to 3, **characterized in that** the guide element (15) is designed as an annular projection which is directed radially inwards in the lower region and which has a distance to the sieve bottom (2) whilst forming a gap, wherein the gap is open towards the middle.

5. A fluidized bed device according to one of the claims 1 to 4, **characterized in that** the height of the two-component nozzle and/or the discharge opening of the air guide channel in the nozzle holder may be set depending on the quantity and/or the density and/or the shape of the product.

6. A fluidized bed device according to one of the claims 1 to 5, **characterized in that** the nozzle holder (7) projects above the sieve bottom into the product container (1), and the projecting region is cone-like, or ascends towards the two-component nozzle in a concave or convex manner.

7. A fluidized bed device according to one of the claims 2 to 6, **characterized in that** the at least one air guide channel is designed as an annular gap which is designed bordering the two-component nozzle.

8. A fluidized bed device according to one of the claims 1 to 7, **characterized in that** the product container at its transition region to the bottom comprises formations for directing a return flow of particles in the direction of the two-component nozzle.

9. A fluidized bed device according to claim 8, **characterized in that** the transition region is provided with roundings.

10. A fluidized bed device according to one of the claims 1 to 9, **characterized in that** the product quantity to be processed is 2 to 100 g, preferably smaller than 50g.

11. A fluidized bed device according to one of the claims 1 to 10, **characterized in that** a transition housing (4) is provided for extending the free flight path of the particles, which is arranged between the product container (1) and the filter housing (5).

12. A fluidized bed device according to one of the claims 1 to 11, **characterized in that** a charging device (18) is attached to the wall of the filter housing or of the transition housing, said charging device comprising a sealing receiver (22) for a supply container (23) containing the particles.

13. A fluidized bed device according to claim 12, **characterized in that** the receiver (22) is arranged on a sleeve (20) which is rotatable about a connecting piece (19), and that the sleeve (20) with the receiver (22) and the supply container (23) is rotatable out of a first position in which the supply container (23) is closed off, into a second position in which the supply container (23) is in connection with the inner space encompassed by the housing.

14. A fluidized bed device according to one of the claims 12 or 13, **characterized in that** the charging device is designed in a revolver-like manner and comprises a plurality of receivers (23).

15. A fluidized bed device according to one of the claims 1 to 14, **characterized in that** the filter housing (5) is provided with a shaking or beating device (17) for detaching particles which stick to the housing walls.

16. A fluidized bed device according to one of the claims 1 to 15, **characterized in that** the individual housing parts (1, 3, 4, 5) are connected by way of detachable quick-connections, such as clamping connections, in a sealed manner.

## Revendications

1. Dispositif à lit fluidisé pour la granulation et le revêtement de particules en quantités minimes avec au moins un réservoir de produit (1) de forme essentiellement-conique, un boîtier de filtre (5) disposé au dessus du réservoir de produit (1) avec des filtres (6) insérés et une partie inférieure de boîtier (3) disposée sous le réservoir de produit (1) conique avec une amenée d'air de processus, dans lequel le réservoir de produit (1) présente un fond à tamis (2), dans lequel est insérée au milieu une buse binaire (8), dont la hauteur peut être réglée en fonction du produit à traiter et du type de processus par rapport au fond à tamis et un élément conducteur (15) avec une zone de transition courbée à la paroi de réservoir dans la partie inférieure du réservoir de processus est dirigé radialement vers l'intérieur et est disposé avec un espace d'air vers le fond à tamis, qui guide de l'air de processus par la fente avec une composante radiale au moins partiellement dans la direction de la buse binaire (8).

2. Dispositif à lit fluidisé selon la revendication 1, **caractérisé en ce que** la buse binaire (8) est insérée au milieu dans un support de buse (7) qui présente au moins un canal de guidage d'air alimenté en air de processus, dont la dimension de l'ouverture d'évacuation peut être choisie en fonction de la hauteur de la buse binaire (8), du produit et/ou du type de processus.

3. Dispositif à lit fluidisé selon la revendication 2, **caractérisé en ce que** le support de buse (7) est pourvu d'un capuchon annulaire interchangeable pour l'adaptation de l'évacuation.

4. Dispositif à lit fluidisé selon l'une quelconque des revendications 1 à 3, **caractérisé en ce que** l'élément conducteur (15) est réalisé comme une saillie de type anneau dirigée radialement vers l'intérieur dans la zone inférieure, qui présente une distance par rapport au fond à tamis (2) en formant une fente, la fente étant ouverte vers le milieu.

5. Dispositif à lit fluidisé selon l'une quelconque des revendications 1 à 4, **caractérisé en ce que** la hauteur de la buse binaire et/ou l'ouverture d'évacuation du canal d'amenée d'air dans le support de buse peut être réglée en fonction de la quantité et/ou de la densité et/ou de la forme du produit.

6. Dispositif à lit fluidisé selon l'une quelconque des revendications 1 à 5, **caractérisé en ce que** le support de buse (7) pénètre par le fond à tamis dans le réservoir de produit (1) et la zone de pénétration est conique, ou augmente de manière concave ou convexe vers la buse binaire.

7. Dispositif à lit fluidisé selon l'une quelconque des revendications 2 à 6, **caractérisé en ce que** l'au moins un canal d'amenée d'air est réalisé comme une fente annulaire qui est réalisée jouxtant la buse binaire.

8. Dispositif à lit fluidisé selon l'une quelconque des revendications 1 à 7, **caractérisé en ce que** le réservoir de produit présente sur sa zone de transition au fond des réalisations pour le guidage d'un flux de retour de particules en direction de la buse binaire.

9. Dispositif à lit fluidisé selon la revendication 8, **caractérisé en ce que** la zone de transition est pourvue d'arrondis.

10. Dispositif à lit fluidisé selon l'une quelconque des revendications 1 à 9, **caractérisé en ce que** la quantité de produits à traiter est comprise entre 2 et 100 g, de préférence est inférieure à 50 g.

11. Dispositif à lit fluidisé selon l'une quelconque des revendications 1 à 10, **caractérisé en ce qu'**un boîtier de transition (4) qui est disposé entre le réservoir de produit (1) et le boîtier de filtre (5), est prévu pour le prolongement de la hauteur de vol libre des particules.

12. Dispositif à lit fluidisé selon l'une quelconque des revendications 1 à 11, **caractérisé en ce qu'**un dispositif d'alimentation (18) qui présente un logement (22) étanche pour un réservoir d'alimentation (23) contenant les particules, est monté sur la paroi du boîtier de filtre ou du boîtier de transition.

13. Dispositif à lit fluidisé selon la revendication 12, **caractérisé en ce que** le logement (22) est disposé sur une douille (20) rotative autour d'une tubulure (19) et **en ce que** la douille (20) peut pivoter avec le logement (22) et le réservoir de stockage (23) à partir d'une première position, dans laquelle le réservoir d'alimentation (23) est fermé, dans une seconde position, dans laquelle le réservoir d'alimentation (23) est en liaison avec l'espace intérieur compris par le boîtier.

14. Dispositif à lit fluidisé selon l'une quelconque des revendications 12 ou 13, **caractérisé en ce que** le dispositif d'alimentation est réalisé comme une tourelle revolver et présente une pluralité de logements (23).

15. Dispositif à lit fluidisé selon l'une quelconque des revendications 1 à 14, **caractérisé en ce que** le boîtier de filtre (5) est pourvu d'un dispositif de secouage ou de tassement pour détacher les particules adhérant sur les parois du boîtier.

16. Dispositif à lit fluidisé selon l'une quelconque des revendications 1 à 15, **caractérisé en ce que** les parties de boîtier (1, 3, 4, 5) individuelles sont reliées par des liaisons rapides amovibles telles qu'une liaison par serrage de manière étanche.
